Europäisches Patentamt

European Patent Office

Office européen des brevets

(11) Publication number: **0 192 178**
A1

# EUROPEAN PATENT APPLICATION

(21) Application number: 86101761.4

(22) Date of filing: 12.02.86

(51) Int. Cl.⁴: **B 60 G 17/00**

(30) Priority: 14.02.85 JP 28548/85

(43) Date of publication of application:
27.08.86 Bulletin 86/35

(84) Designated Contracting States:
DE FR GB

(71) Applicant: TOYOTA JIDOSHA KABUSHIKI KAISHA
1, Toyota-cho Toyota-shi
Aichi-ken 471(JP)

(72) Inventor: Asami, Ken
TOYOTA JIDOSHA K.K. 1 Toyota-cho
Toyota-shi Aichi-ken(JP)

(72) Inventor: Ohashi, Kaoru
TOYOTA JIDOSHA K.K. 1 Toyota-cho
Toyota-shi Aichi-ken(JP)

(72) Inventor: Onuma, Toshio
TOYOTA JIDOSHA K.K. 1 Toyota-cho
Toyota-shi Aichi-ken(JP)

(72) Inventor: Buma, Shuuichi
TOYOTA JIDOSHA K.K. 1 Toyota-cho
Toyota-shi Aichi-ken(JP)

(74) Representative: Pellmann, Hans-Bernd, Dipl.-Ing. et al,
Patentanwaltsbüro
Tiedtke-Bühling-Kinne-Grupe-Pellmann-Grams-Struif
Bavariaring 4
D-8000 München 2(DE)

(54) Rear height controller for a vehicle body.

(57) When a vehicle passes over a protrusion or a depression in the road surface, the front wheels move up or down first. The rear height controller detects this movement of the front wheels and lowers the rear of the vehicle in case of a protrusion, and raises it in case of a depression to maintain the resulting rear vehicle height as unchanged as possible. A front vehicle height sensor detects the distance between the body and the front wheel and sends a front vehicle height signal to a protrusion judgment means and a sinking judgment means. The protrusion judgment means and the sinking judgment means compare the front vehicle height signal with predetermined reference signals to judge whether the signal indicates a definite protrusion or a depression. If a definite protrusion or depression is detected, a rear vehicle adjustment means changes the rear vehicle height by acting on the rear suspension.

Fig. 1

TITLE OF THE INVENTION

REAR HEIGHT CONTROLLER FOR A VEHICLE BODY

BACKGROUND OF THE INVENTION

The present invention relates to a rear height controller for a vehicle. More particularly, the invention relates to a rear height controller which is effective against a single shock caused by a protrusion or a depression in a road surface on which an automobile is running.

Conventionally, these kinds of apparatus are proposed, for example, in the published unexamined Japanese patent applications Sho-57-172808, Sho-59-23713 and Sho 59-23712. These are such that they detect a body height, or an upward or a downward acceleration of a body of a running vehicle by vehicle height sensors and when the detected signal is greater than a preset value and lasts longer than a preset time, they judge that the running road is a rough road and consequently change the vehicle height to improve the riding feeling of the vehicle.

However, under the above-mentioned conventional control, the vehicle is not judged to be running on a rough road, until a large turbulence is continuously detected by the vehicle height sensor. If the vehicle passes over a joint or patches of the road having a single protrusion or depression, the vehicle usually receives only a single shock and resumes running on a flat part of the road again, so that the vehicle height is not altered. For that reason, the occupants of the vehicle are not protected from the unpleasant shock due to

1

such single protrusion or depression, which is different from the case that the vehicle is running on a rough road having continuous protrusions, sinkings or depressions. On some cases of running over such single protrusion or depression, the controllability and the stability of the vehicle deteriorate as well.

SUMMARY OF THE INVENTION

An object of the present invention is to appropriately control the height of the rear part of the body of a vehicle, to maintain the controllability and the stability of the vehicle and provide the occupants of the vehicle with a smooth ride.

Another object of the present invention is to alter the height of the rear part of a vehicle passing over such a single protrusion or depression of the road surface like a joint of the road to keep the posture of the vehicle unchanged as much as possible which leads to a good controllability and stability of the vehicle and the comfortable feeling of riding.

An additional object of the present invention is to return the height of the rear part of a vehicle to the original state as soon as the vehicle resumes running on a flat part of the road after passing over the single protrusion or depression of the road surface, to always control the suspension to a characteristic appropriate to the condition of the road surface at any point in time.

According to the present invention, a rear height

2

controller of a body for a vehicle having height adjustment means between the body of the vehicle and its wheels comprises the following means in order to attain the objects;

(a) front vehicle height detection means by which a distance between the front wheel and the body of the vehicle is detected to generate a front vehicle height signal;

(b) a protrusion judgment means by which the front vehicle height signal is compared with a predetermined reference signal to generate a protrusion signal when the front vehicle height signal is less than the predetermined reference signal;

(c) a sinking judgment means by which the front vehicle height signal is compared with a predetermined reference signal to generate a sinking signal when the front vehicle height signal is greater than the predetermined reference signal; and

(d) a rear height adjustment means for lowering the height of the body at the rear axle of the vehicle in accordance with the protrusion signal and to raise the height of the body at the rear axle of the vehicle in accordance with the sinking signal.

The front vehicle height detection means detects the distance between the front wheel and the body of the vehicle and generates a front vehicle height signal to send to the protrusion judgment means and the sinking judgment means. The front vehicle height signal may be either one of the following signals: a signal indicating a displacement of the height of the vehicle from an average height thereof, and a signal

3

indicating a speed of the displacement of the height of the vehicle. Other kinds of front vehicle height signals may be used.

The protrusion judgment means and the sinking judgment means receive the front vehicle height signal and compare the signal with predetermined reference signals. When the front vehicle height signal indicating a displacement from an average vehicle height is less than the reference signal, which shows that the front wheels move up on a definite protrusion of a road surface, the protrusion judgment means generates a protrusion judgment signal. If the vehicle height signal indicates a speed of the displacement, the protrusion means compares the absolute value of the signal with a reference signal only when the sign of the signal corresponds to a moving up of the wheels. The sinking judgment means performs a similar function to the protrusion judgment means but corresponding to a movement of front wheels down a definite depression in a road surface.

The rear height adjustment means lowers the rear part of the vehicle body in accordance with the protrusion judgment signal and raises it in accordance with the sinking judgment signal. Those height adjustment operations maintain the posture of the running vehicle unchanged as much as possible by compensating for the movement of the rear wheels caused by the protrusion or depression a short time after the front wheels passed it.

The object of the control operation of the rear height adjustment means can be gas suspensions, liquid suspensions,

4

mechanical suspensions, etc.

In case of gas suspensions, the rear height adjustment means controls gas feed to or gas discharge from gas chambers of the rear gas suspensions to lower or raise the height of the body at the rear axle of the vehicle.

In case of liquid suspensions, the rear height adjustment means controls liquid feed to or liquid discharge from the liquid cylinders of the rear liquid suspensions to lower or raise the height of the body at the rear axle of the vehicle.

And, in case of mechanical suspensions, the rear height adjustment means controls mechanical apparatus of the rear mechanical suspensions to lower or raise the height of the body at the rear axle of the vehicle.

The rear height adjustment means returns the altered heights to the original height a predetermined time, advantageously depending on the vehicle speed, after the protrusion signal or the sinking signal is generated. This is done for adjusting the vehicle height in accordance with a flat part of the road after both the front and rear wheels have passed the protrusion or depression of the road surface.

BRIEF DESCRIPTION OF THE DRAWINGS

A preferred embodiment of the invention will be disclosed hereinafter with reference to the appended drawings in which:

Fig. 1 shows an outline of the structure of the embodiment of the present invention;

Fig. 2 shows the details of the structure of the embodiment of Fig. 1;

5

Fig. 3(A) shows a sectional view of the main part of an air suspension;

Fig. 3(B) shows a sectional view along a line III B - III B of the air suspension shown in Fig. 3(A);

Fig. 4 shows the structure of an electronic control unit (ECU);

Fig. 5(A) shows the structure of an input section which receives a digital front vehicle height signal;

Fig. 5(B) shows the structure of an input section which receives an analog front vehicle height signal;

Figs. 6 (A), (B),(C)and (D) show flow charts of processings which are performed in the ECU of the embodiment of Fig. 4;

Fig. 7 shows a flow chart of some of the processings, which are for calculating an average value of the vehicle height signal;

Fig. 8 shows a flow chart of some of the processings, which correspond to the incremental counting of a timer; and

Figs. 9(A), (B), (C) and (D) show time charts of some of the processings.


DESCRIPTION OF THE PREFERRED EMBODIMENTS

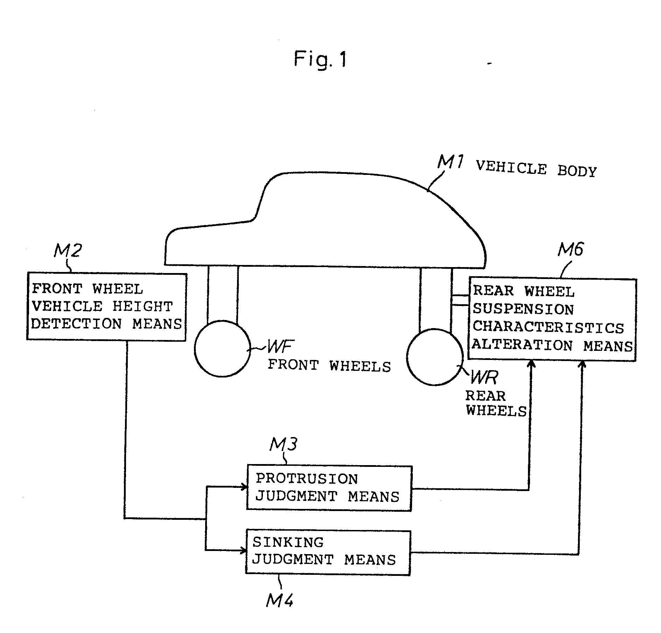

A preferred embodiment of the present invention is hereinafter described with explanatory figures. Fig. 1 shows an outline of the structure of this embodiment illustrating the relationship among the elements. A front vehicle height detection means M2 is provided between the body M1 and the front wheels WF of an automobile and detects the distance therebetween to send a front vehicle height signal according to the distance to a protrusion judgment means M3 and a sinking or depression judgment means M4. The protrusion judgment means M3 and the sinking judgment means M4 compare the front vehicle height signal with respective predetermined reference signals and generate a protrusion signal or a sinking signal when certain conditions are satisfied. The protrusion signal or the sinking signal is sent to a rear height adjustment means M6 which controls the rear height of the vehicle by controlling the distance between the body M1 and the rear wheels WR.

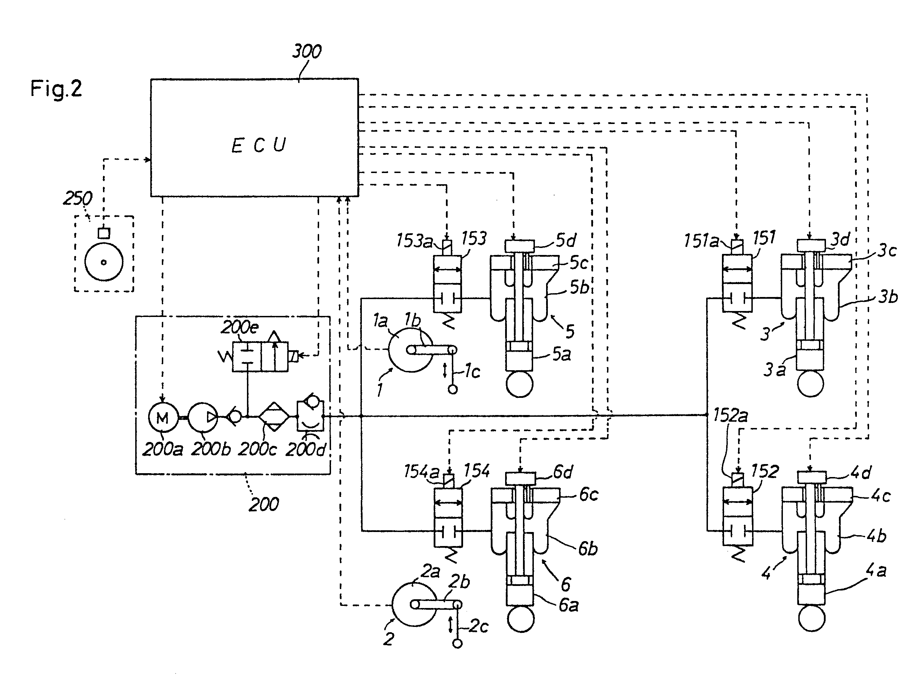

Fig. 2 shows details of the structure of the first embodiment. A right front vehicle height sensor 1 is provided between the body and right front wheel of the automobile to detect the distance between the automobile body and a right suspension arm, which follows the motion of the wheel. A left front wheel vehicle height sensor 2 is provided between the body and left front wheel of the vehicle to detect the distance between the vehicle body and a left suspension arm. The short cylindrical bodies 1a and 2a of the vehicle height sensors 1 and 2 are secured on the vehicle body. Links 1b and 2b extend generally perpendicularly from the center shafts of the bodies 1a and 2a. Turnbuckles 1c and 2c are rotatably coupled to the ends of the links 1b and 2b opposite the bodies 1a and 2a. The ends of the turnbuckles 1c and 2c opposite the links are rotatably coupled to portions of the suspension arms. A potentiometer, whose electric resistance changes depending on the rotation of the center shaft of the

7

body of each vehicle height sensor to detect the change in the vehicle height in the form of a voltage, is built in each of the bodies of the vehicle height sensors 1 and 2. Although the vehicle height sensors of the above-mentioned type are used in this embodiment, vehicle height sensors of such other type may be used. For examle, plural light interrupters may be provided in the body of each sensor, and a disk having a slit coaxial with the center shaft of the sensor turns on or off the light interrupters depending on the change in the vehicle height to detect the height.

Fig. 2 also shows an air suspension 3 which is provided between the suspension arm (not shown in the drawings) for the right rear wheel of the vehicle and the body thereof and extends in parallel with a suspension spring (not shown in the drawings). The air suspension 3 comprises a shock absorber 3a, a main air chamber 3b, an auxiliary air chamber 3c and an actuator 3d, and has a spring function, a vehicle height adjustment function and a shock absorber function. The same air suspensions 4, 5 and 6 are provided for the left rear wheel, right front wheel and left front wheel of the vehicle, respectively.

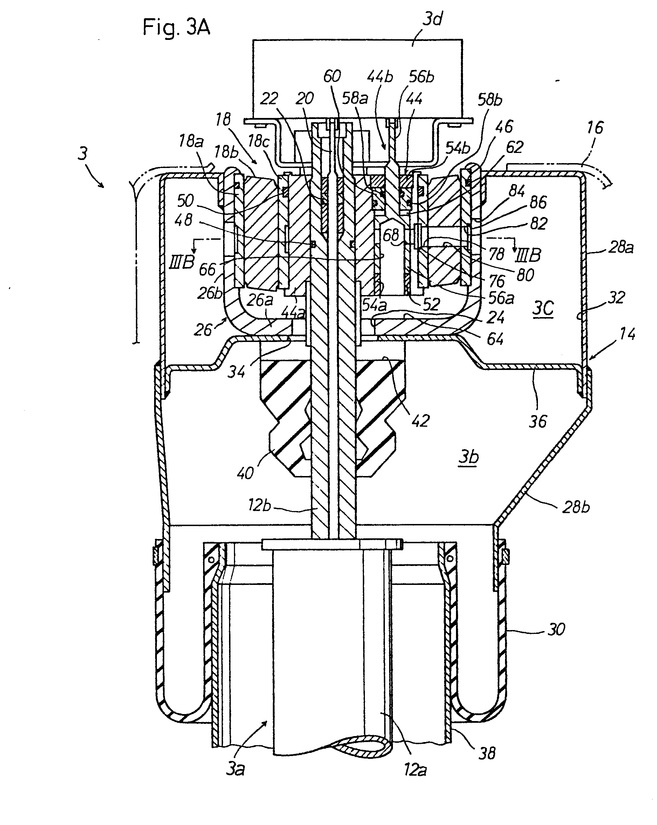

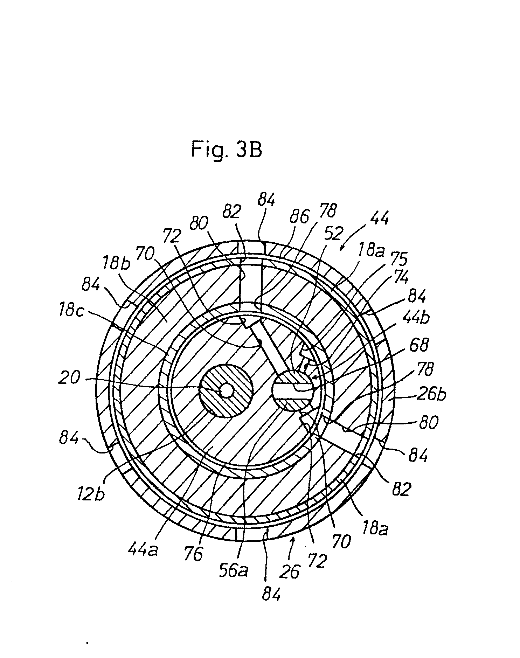

Figs. 3 (A) and 3 (B) show a construction of the main part of the air suspension 3. Fig. 3 (B) shows a sectional view along a line III B- III B shown in Fig. 3 (A). The other air suspensions 4,5 and 6 have the same construction as the suspension 3. The air suspension 3 includes a conventional shock absorber 3a composed of a piston and a cylinder, and an air spring unit 14 provided in conjunction with the shock

8

absorber.  An axle (not shown in the drawings) is supported at the lower end of the cylinder 12a of the shock absorber 3a. An elastic cylindrical assembly 18 for elastically supporting a piston rod 12b to the vehicle body 16 is provided at the upper end of the piston rod 12b extending from the piston (not shown in the drawings) slidably fitted in the cylinder 12a. The shock absorber 3a is a conventional buffer whose damping force can be varied for adjustment by operating the valve function of the piston.  A control rod 20 for adjusting the damping force is liquid-tightly and rotatably fitted with a sealing member 22 in the piston rod 12b.

The air spring unit 14 has a chamber 32 which is defined by a circumferential member 26 comprising a bottom 26a provided with an opening 24, through which the piston rod 12b is allowed to extend, and a wall 26b rising from the peripheral portion of the bottom 26a, an upper housing member 28a covering the circumferential member 26 and secured on the vehicle body, a lower housing member 28b open at the lower end and coupled to the lower end of the upper housing member 28a, and a diaphragm 30 made of an elastic material and closing the lower end of the lower housing member 28b.  The chamber 32 is divided into a lower main air chamber 3b and an upper auxiliary air chamber 3c by a partition member 36 secured on the bottom 26a of the circumferential member 26 and having an opening 34 corresponding to the opening 24 provided in the bottom 26a.  Both the chambers 3b and 3c are filled with compressed air.  The partition member 36 is fitted with a conventional buffer rubber 40 which can be brought into

9

contact with upper end of the cylinder 12a. The buffer rubber 40 has a passage 42 for connecting the openings 24 and 34 to the main air chamber 3b.

The elastic cylindrical assembly 18 is disposed inside the circumferential member 26 whose wall 26b defines the inside circumferential surface of the auxiliary air chamber 3c, in such manner that the assembly 18 surrounds the piston rod 12b. The cylindrical elastic assembly 18 is provided with a valve unit 44 for controlling the communication of both the air chambers 3b and 3c. The assembly 18 comprises an outer cylinder 18a, a cylindrical elastic member 18b and an inner cylinder 18c which are disposed concentrically to each other. The cylindrical elastic member 18b is secured on both the cylinders 18a and 18c. The outer cylinder 18a of the assembly 18 is press-fitted on the wall 26b of the circumferential member 26 secured on the vehicle body, under the action of the upper housing member 28a. The valve casing 44a of the valve unit 44, through which the piston rod 12b is allowed to extend, is secured on the inner cylinder 18c. Since the piston rod 12b is secured on the valve casing 44a, the piston rod is elastically supported to the vehicle body by the cylindrical elastic assembly 18. An annular air sealing member 46 is tightly packed in between the outer cylinder 18a and the bottom 26b of the member 26. An annular air sealing member 48 is tightly packed in between the piston rod 12b and and the valve casing 44a. An annular air sealing member 50 is tightly packed in between the inner cylinder 18c and the valve casing 44a.

10

The valve casing 44a has a hole 52 which is open at both ends and extends in parallel with the piston rod 12b. A rotary valve 44b is rotatably supported in the hole 52. The valve 44b comprises a main portion 56a, which can be brought into contact with a lower positioning ring 54a provided at the lower end of the hole 52, and a small-diameter operating portion 56b projecting from the main portion above the elastic cylindrical assembly 18. An upper positioning ring 54b, which cooperates with the lower positioning ring 54a to prevent the valve 44b from dropping out of the hole 52, is provided at the upper end of the hole 52. An annular sealing base 60 holding an inner air sealing member 58a and an outer air sealing member 58b for tightly closing the hole 52 is provided between the upper positioning ring 54b and the main portion 56a of the valve 44b. A friction reducer 62 for smoothing the rotative motion of the valve 44b when the main portion 56a of the valve is pushed to the sealing base 60 by air pressure is provided between the sealing base and the main portion of the valve.

A chamber 64, which communicates with the main air chamber 3b through the openings 24 and 34 and the passage 42 of the buffer rubber 40, is formed in the lower portion of the elastic cylindrical assembly 18. The main portion 56a of the valve 44b has a recess 66 open to the chamber 64, and has a communication passage 68 extending through the main portion 56a in a diametral direction thereof across the recess 66.

The valve casing 44a, which houses the valve 44b, has a pair of air passages 70, each of which can communicate at one end with the communication passage 68, as shown in Fig. 3 (B).

11

The air passages 70 extend on almost the same plane outwards in a diametral direction of the hole 52, toward the peripheral surface of the valve 44b. The other end of each air passage 70 is open to the peripheral surface of the valve casing 44a through a face hole 72. An air passage 74, which can communicate at one end with the communication passage 68, extends on almost the same place as the pair of air passages 70 toward the peripheral surface of the valve casing 44a, between the pair of air passages 70 outside the hole 52. The diameter of the air passage 74 is smaller than that of each of the air passages 70. The other end of the air passage 74 is open to the peripheral surface of the valve casing 44a through a face hole 75. The inside circumferential surface of the inner cylinder 18c covering the peripheral surface of the valve casing 44a has an annular recess 76 which surrounds the peripheral surface of the valve casing to connect the face holes 72 and 75 for the air passages 70 and 74 to each other.

The inner cylinder 18c has an opening 78 which extends continuously to the recess 76 which constitutes an annular air passage. The cylindrical elastic member 18b has through holes 80, which extend outwards in the radial direction of the member 18b correspondingly to the openings 78. The through holes 80 are made open to the peripheral surface of the outer cylinder 18a through the openings 82 of the cylinder so that the openings 78 and 82 and the through holes 80 define an air passage including the air passages 70 and extending through the elastic cylindrical assembly 18.

The peripheral surface of the wall 26b of the

12

circumferential member 26 covering the outer cylinder 18a are provided with plural openings 84 which are located at equal intervals in the circumferential direction of the member 26 and extend continuously to the auxiliary air chamber 3c to connect the openings 78 and 82 and the through holes 80 to the auxiliary air chamber 3c. The peripheral surface of the outer cylinder 18a is provided with an annular recess 86 which surrounds the outer cylinder at the openings 82 to connect the openings 84, 78 and 82 and the through holes 80 to each other. The openings 84 extend continuously to the recess 86 constituting an annular air passage.

Although the openings 78 and 82 and the through holes 80 are provided correspondingly to the two air passages 70 of the valve casing 44a in the embodiment shown in Fig. 3 (B), the air passages 70 and 74 can be provided in optional positions in the circumferential direction of the elastic member 18b because the annular air passage 76, with which the air passages 70 and 74 communicate, is formed between the inner cylinder 18c and the valve casing 44a.

A control rod 20 for adjusting the damping force of the shock absorber 3a, and a conventional actuator 3d for rotating the valve 44b of the valve unit 44, are provided at the upper end of the piston rod 12b, as shown Fig. 3 (A).

Since the air suspension 3 has the above-mentioned construction, the air suspension performs actions described hereinafter. When the valve 44b is kept in such a closed position shown in Fig. 3 (B) that the communication passage 68 of the valve does not communicate with any of the air passages

13

70 and 74 of the valve casing 44a, the main air chamber 3b and the auxiliary air chamber 3c are disconnected from each other so that the spring constant of the suspension 3 is set at a large value. When the actuator 3d has rotated the valve 44b into such a position that the communication passage 68 of the valve communicates with the large-diameter air passages 70 of the valve casing 44a, the main air chamber 3b is connected to the auxiliary air chamber 3c through the communication passage 68 communicating with the main air chamber, the large-diameter air passages 70 and the openings 78 and through holes 80 of the elastic assembly 18 and the openings 82 and 84, so that the spring constant of the suspension 3 is set at a small value. When the valve 44b is rotated into such a position by the regulated actuator 3d that the communication passage 68 of the valve communicates with the small-diameter communication passage 74 of the valve casing 44a, the main air chamber 3b is connected to the auxiliary air chamber 3c through the communication passage 68 communicating with the main air chamber, the small-diameter air passage 74, the air passage 76, the openings 78 and through holes 80 of the elastic assembly 18 and the openings 82 and 84, so that the spring constant of the suspension 3 is set at an intermediate value because the small-diameter air passage 74 provides a higher air flow resistance than the large-diameter air passages 70.

Leveling valves 151-154 are provided for the air suspensions 3-6, respectively, as shown in Fig. 2. A compressed air feed and discharge system 200, which is described below, is connected to or disconnected from the main

14

air chambers 3b-6b of the air suspensions 3-6 by the leveling valves 151-154 depending on whether electricity is supplied to solenoids 151a-154a. When the leveling valves 151-154 are opened, compressed air is fed to the air suspensions, the height of the vehicle is increased. If the compressed air is discharged from the air suspensions, the height of the vehicle is decreased. When the leveling valves 151-154 are closed, the height of the vehicle is maintained.

In the compressed air feed and discharge system 200, a compressor 200b is driven by a motor 200a to produce the compressed air. An air drier 200c dries the compressed air to be fed to the air suspensions 3-6, to protect pipes and the parts of the air suspensions from moisture and prevent a pressure abnormality due to a moisture phase change in the main air chambers 3b-6b and auxiliary air chambers 3c-6c of the air suspensions. When the compressed air is fed to the air suspensions, a check valve 200d provided with a fixed orifice is opened. When the compressed air is discharged from the air suspensions, the check valve 200d is closed so that the air flows out through only the fixed orifice. When the compressed air is discharged from the air suspensions 3-6, a release solenoid valve 200e is driven so that the compressed air discharged from the air suspensions through the fixed orifice at the check valve 200d and through the air drier 200c is released into the atmosphere. The solenoid valve 200e can be regulated to change the volume of each of the main air chambers of the air suspensions 3-6 to adjust the height of the vehicle.

15

A vehicle speed sensor 250 is provided in a speedmeter, for example, so that the sensor sends out a pulse signal corresponding to the speed of the vehicle, in response to the motion of the axle of the vehicle.

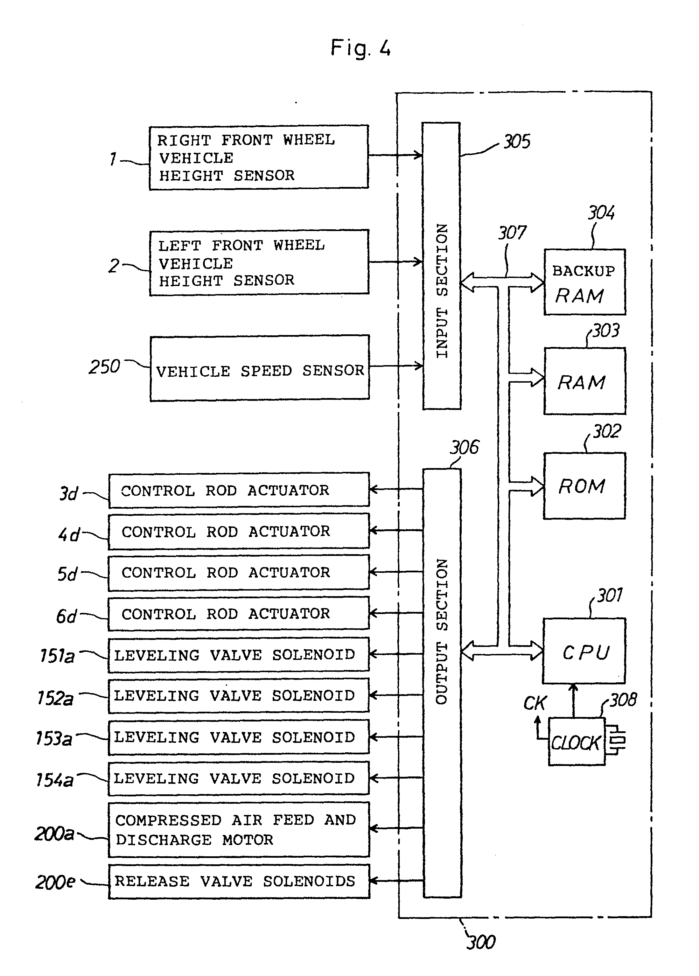

The output signals of the vehicle height sensors 1 and 2 and the vehicle speed sensor 250 are entered into an electronic control unit (hereinafter referred to as ECU) 300, which processes these signals to send out drive signals to the actuators 3d-6d of the air suspensions 3-6, the leveling valves 151-154, the motor 200a of the compressed air feed and discharge system 200 and the solenoid valve 200e to perform appropriate control if necessary. Fig. 4 shows the construction of the ECU 300. A central processing unit (hereinafter referred to as CPU) 301 receives the output data from the sensors and performs operations on the data, in accordance with a control program, to carry out processings for the control of various units or means or the like. The control program and initial data are stored in a read-only memory (hereinafter referred to as ROM) 302. The data, which are entered in the ECU 300, and data necessary for operations and control, are stored into and read from a random-access memory (hereinafter referred to as RAM) 303. A backup random-access memory (hereinafter referred to as backup RAM) 304 is backed up by a battery so that even if the ignition key switch of the automobile is turned off, the backup RAM retains data which are needed after the turning-off of the switch.

An input section 305 comprises an input port not shown in the drawings, a wave-shaping circuit provided if necessary, a

16

multiplexer which selectively sends out the output signals of the sensors to the CPU 301, and an A/D converter which changes an analog signal into a digital signal. An output section 306 comprises an output port not shown in the drawings, and a drive circuit for driving the actuators according to the control signals of the CPU 301 as occasion demands. A bus 307 connects circuit components such as the CPU 301 and the ROM 302, the input section 305 and the output section 306 to each other to transmit data. A clock circuit 308 sends out a clock signal CK at prescribed intervals to the CPU 301, the ROM 302, the RAM 303 and so forth so that a control timing is set by the clock signal.

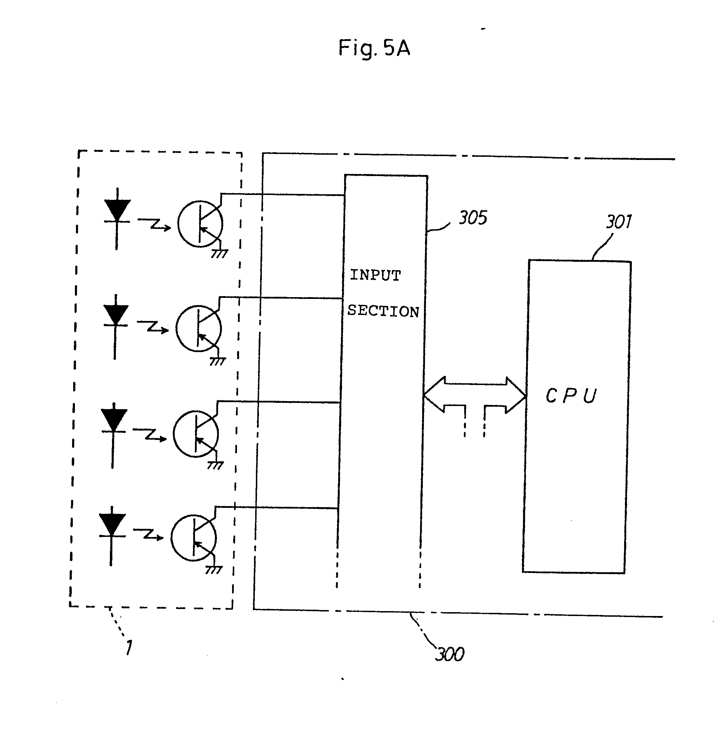

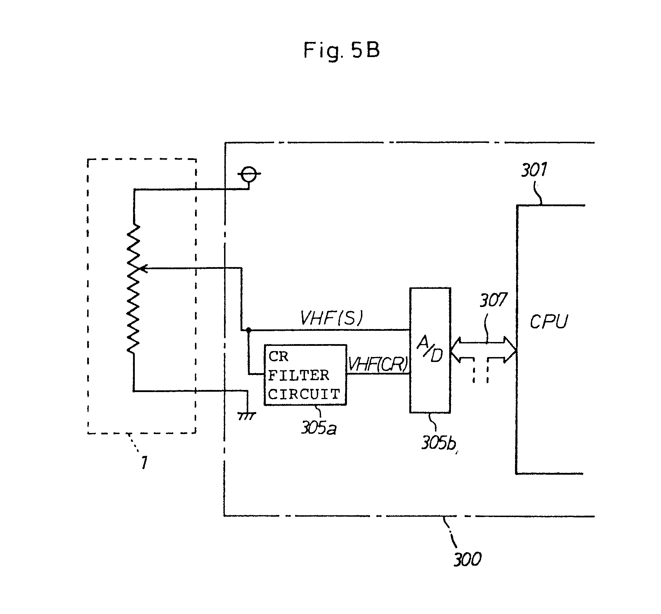

If the output signal of the vehicle height sensor 1 is a digital signal, the signal is transmitted to the CPU 301 through the input section 305 including a buffer as shown in Fig. 5(A). Fig. 5(A) shows the structure of an input section which receives a digital front vehicle height signal. If the output signal of the vehicle height sensor 1 is an analog signal, a construction as shown in Fig. 5 (B) is provided. In the latter case, the vehicle height sensor 1 sends out the analog signal of a voltage corresponding to the height of the vehicle. The analog voltage signal is converted into a voltage VHF(CR) indicating an average height of the vehicle, by a CR filter circuit 305a made of a low-pass filter. The voltage VHF(CR) is applied to an A/D converter 305b. The analog voltage signal is also directly applied as a voltage VHF(S) indicating the current height of the vehicle, to the A/D converter 305b. The converter 305b changes both the input

17

signals into digital signals through the action of a multiplexer. The digital signals are transmitted from the converter the CPU 301. The same thing applies to the left front wheel vehicle height sensor 2.

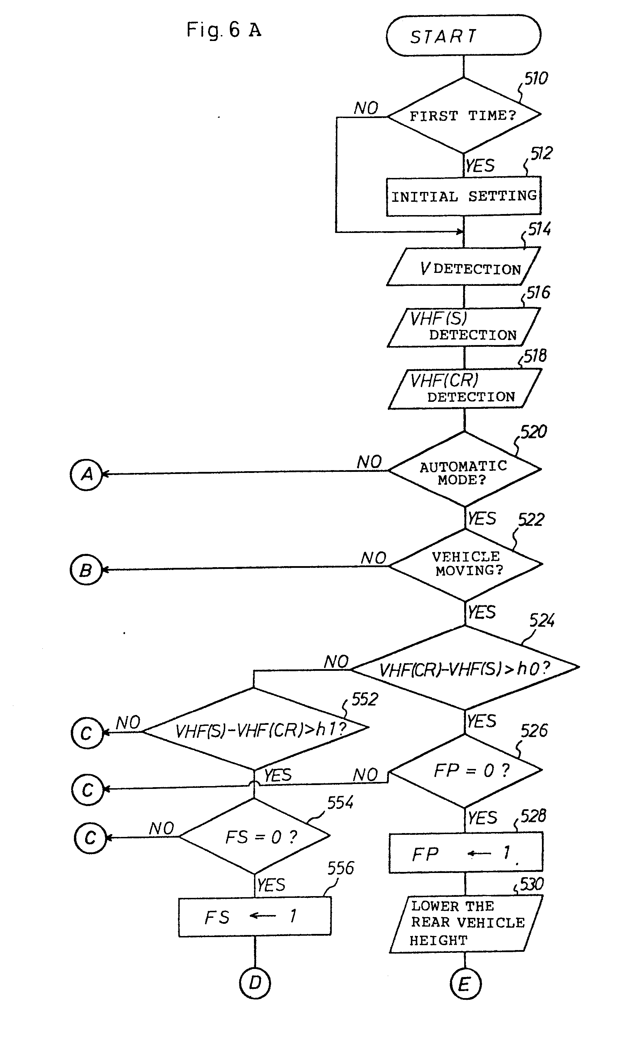

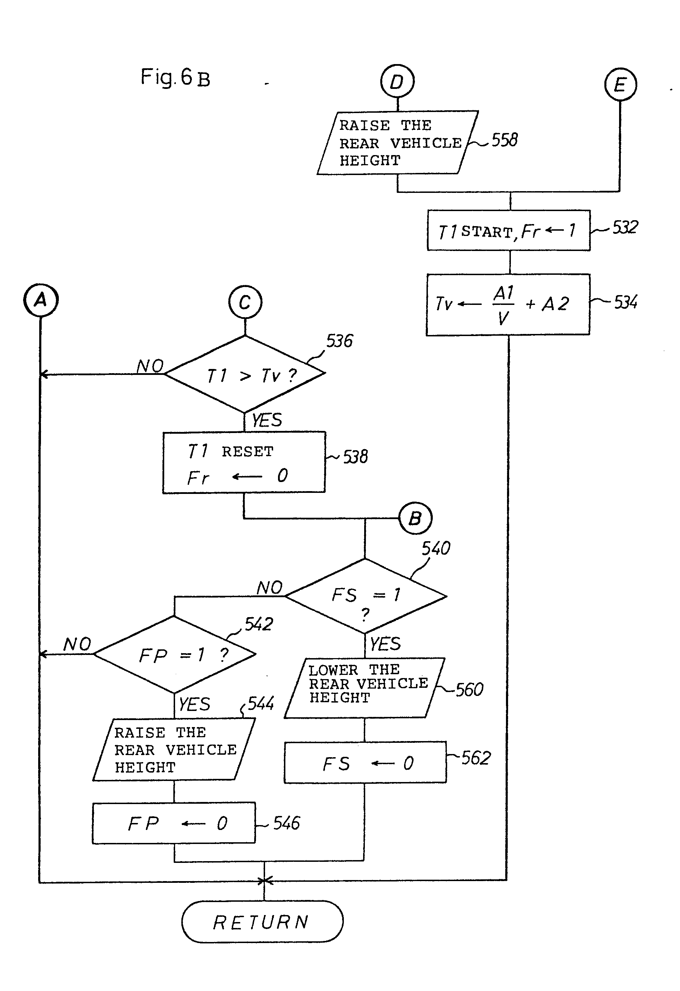

The processings, which are performed by the ECU 300, are hereinafter described referring to a flow chart shown in Fig. 6 (A), 6(B). The flow chart indicates the processings performed by the ECU 300 in response to the vehicle height sensor 1 of the linear type which sends out an analog signal, as shown in Fig. 5 (B). The processings are repeatedly performed at every prescribed time, such as 5 msec. The outline of the processings shown in the flow chart is described as follows:

(1) A current vehicle height VHF(S) and an average vehicle height VHF(CR) are determined (Steps 516 and 518);

(2) It is judged whether or not the current vehicle height has displaced more than a predetermined value h0 from the average vehicle height (Step 524);

(3) If the current vehicle height is judged to have displaced below the predetermined value h0 from the average vehicle height, the front wheels are judged to move up on a protrusion and the vehicle height at the rear axle is lowered (Step 530) by driving the solenoids 151a and 152a to open the leveling valves 151 and 152 and opening the release solenoid valve 200e in Fig. 2;

(4) It is judged whether or not the current vehicle height has displaced over a predetermined value h1 from the average vehicle height (Step 552);

18

(5)  If  the current vehicle height is judged to have displaced over the predetermined value h1 from the average vehicle height, the front wheels are judged to move down in a sinking or depression and the vehicle height at the rear axle is raised (Step 558) by driving the solenoids 151a and 152a to open the leveling valves 151 and 152 to the main air chambers 3b and 4b of the air suspensions 3 and 4 in Fig. 2; and

(6)  After the processings of step (5), the vehicle height is returned to the original state if it is altered by step (3) or (5).

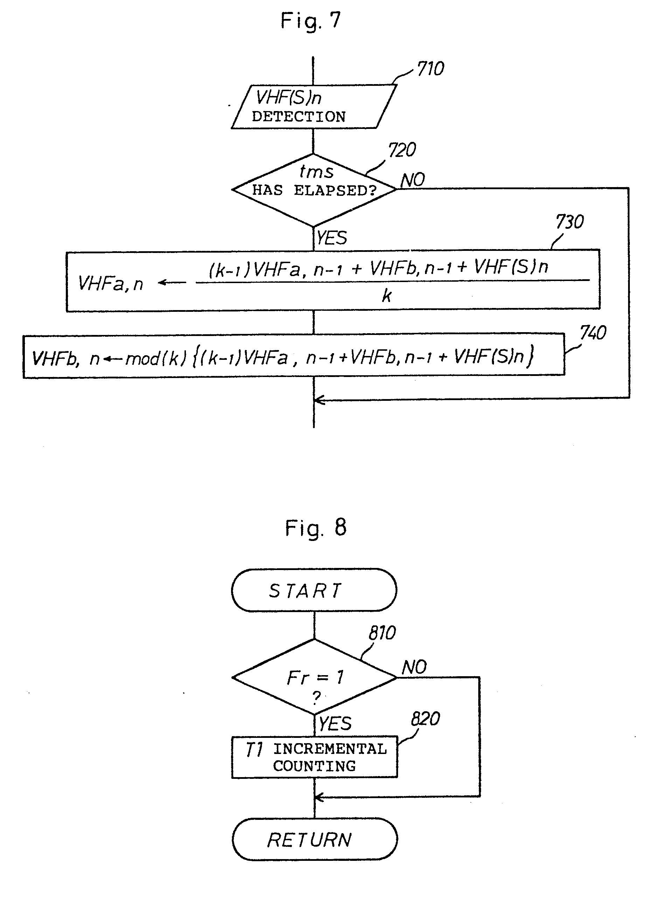

The details of the processings are hereinafter described. The processings are repeatedly performed in every 5 msec.  It is firstly judged whether or not the processings are being performed for the first time since the activation of the ECU (Step 510).  If the processings are judged to be being performed for the first time, initial setting is effected (Step 512), all variables are cleared and all flags are reset. After the initial setting is effected (Step 512) or if the processings in the routine are judged to be being performed for the second time or later, the speed V of the vehicle is detected (Step 514) in terms of the output signal of the vehicle speed sensor 250.  A current vehicle height VHF(S) is then detected (Step 516).  To detect the current vehicle height, either of the outputs of the vehicle height sensors for the right and left front wheels of the vehicle may be used.  Since the rear wheels receive a shock regardless of which of the front wheels has moved up or down due to the protrusion or depression of the road surface, the average of

19

the outputs of both the vehicle height sensors for the front wheels may be used or the larger one of the outputs may be used. An average of the past outputs of the vehicle height sensor 1 is determined to set an average vehicle height (Step 518). In this embodiment, the average vehicle height VHF(CR) is directly determined from the output signal of the vehicle height sensor 1 through the CR filter circuit 305a made of the low-pass filter, as shown in Fig. 5(B). If the vehicle height sensor 1 is sending out a digital signal, the average vehicle height may be calculated from past vehicle heights VHF(S) measured in the ECU 300. For example, the calculation can be effected by adopting processings shown in Fig. 7, instead of adopting the processings in Steps 516 and 518 shown in Fig. 6(A). In the processings shown in Fig. 7, a current vehicle height $VHF(S)_n$ is detected first (Step 710), and an average $VHF_{a,n}$ of the vehicle height is then calculated (Steps 730 and 740) in every predetermined operation unit time tms (Step 720). In step 730, the following calculation is performed:

$VHF_{a,n} = \{(k - 1)VHF_{a,n-1} + VHF_{b,n-1} + VHF(S)\}/k$   where k: Number  of measured value to be averaged;

$VHF_{a,n}$: Averaged to be calculated currently (n-th time);

$VHF_{a,n-1}$: Averaged calculated previously ( (n-1)-th time);

$VHF(s),n$: Average to be calculated currently (n-th time); and

$VHF_{b,n-1}$: Value calculated previously for convenience to calculate the average $VHF_{a,n}$.

In Step 740, the value $VHF_{b,n}$ is calculated as follows:

$VHF_{b,n} = mod(k)\{(k-1)VHF_{a,n-1} + VHF_{b,n-1} + VHF(S)_n\}$

In such calculation, mod(A){B} means the value of the

20

remainder in the division of B by A. The processings in Steps 730 and 740 constitute such a simple method that a value approximate to the average can be calculated if only the values VHFa,n, VHFa,n-1 and VHFb,n-1 are stored in a memory beforehand. As for thesimple method, past (k-1) pieces of data do not need to be stored in the memory, so that the space of the memory and the time of the calculation are saved. If the space of the memory and the time of the calculation are enough for use, a required number of measured values may be averaged normally.

After the detection of the average (Step 518) as shown in Fig. 6(A), it is judged (Step 520) whether or not the control of each suspension is in an automatic mode. If the driver of the vehicle has not selected the automatic mode by a manual switch, the processings in the routine are terminated. If he has selected the automatic mode, it is judged (Step 522) whether or not the vehicle is not lower than a predetermined level, and whether the vehicle is judged to be moving. If the vehicle is judged to be moving, it is then judged (Step 524) whether or not the difference VHF(CR)-VHF(S) of the averaged vehicle height VHF(CR) from the current vehicle height VHF(S) has exceeded a predetermined value h0. If the difference is judged to be greater than the predetermined value h0, it is then judged whether a flag FP is reset (Step 526), i.e. FP=0, which indicates that the front wheels do not move up on a protrusion of a road surface yet. If the flag FP is reset, the flag FP is set (Step 528) and the rear vehicle height is lowered (Step 530). In operation, the solenoids 151a and 151b

21

are driven to open the leveling valves 151 and 152 and at the same time the release solenoid valve 200e is opened for a predetermined time   t1.  With these operations, the upward movement of the rear wheels caused by the protrusion which the front wheels detected before is compensated to maintain the posture of the running vehicle as unchanged as possible.  The controllability and the ride comfort of the vehicle are thus maintained in passing the protrusion.

As the next processings, a timer T1 is started and a flag Fr is set (Step 532).  The timer T1 is for counting up the time for which the rear height of the vehicle is kept altered. The flag Fr is for determining whether or not the timer T1 should be counting, as shown in Fig. 8 which shows a flow chart indicating a routine which is repeatedly executed in every predetermined time.  If the flag Fr is already set (Step 810), the timer T1 is caused to perform incremental counting (Step 820).

After the alteration of the rear height of the vehicle (Step 530), the time Tv from the detection of the protrusion of the road surface at the front wheel to the passing of the rear wheel over the protrusion is calculated on the basis of the vehicle speed V as follows:

Tv = (A1/V) + A2   where

A1: Wheelbase; and

A2: Compensatory term (constant).

The compensatory term A2 is determined in consideration of the detection lags of the vehicle height sensors 1 and 2, the time taken for the rear wheels to move over the protrusion of the

22

road surface, etc. The current routine is terminated after that.

In the subsequent execution of the routine, the branch to Step 536 is taken by the judgment at Step 526 because the Flag FP is already set by the previous routine. In Step 536, it is judged whether the timer T1 exceeded the time Tv and if this condition is not satisfied, this routine is terminated. Otherwise, i.e., if the rear vehicle height has been lowered for the time Tv, the timer T1 is reset and the flag Fr is also reset (Step 538), which stops the counting of the timer T1 at Step 810 of Fig. 8. Then, it is judged whether a flag FS, whose meaning is explained later, is set (Step 540) and if it is not set, the flag FP is judged to be 1 or not (Step 542). If the flag FP is 1, the rear vehicle height is raised to return to the original height to cope with a normal road surface and the flag FP is reset (Steps 544, 546).

When it is judged 'NO' at Step 524, i.e., the front wheels do not move up on a definite protrusion, a judgment concerning to a depression of the road surface is executed. It is judged whether or not the difference VHF(S)-VHF(CR) of the current vehicle height VHF(S) from the average vehicle height VHF(CR) is greater than a predetermined value h1(Step 522) and if the result is 'YES' it is then judged whether a flag FS is reset (Step 554), which indicates that the front wheels do not fall down in a sinking or depression of a road surface yet. If the flag FS is reset, the flag FS is set (Step 556) and the rear vehicle height is raised (Step 558). In operation, the solenoids 151a and 152a are driven to open

23

the leveling valves 151 and 152 and at the same time compressed air is fed to the main air chambers 3b and 4b of the air suspension 3 and 4 from the compressor 200b for a predetermined time t2. With these operations, the downward movement of the rear wheels caused by the sinking which the front wheels detected is compensated to maintain the posture of the running vehicle as unchanged as possible. Then the Steps 532 and 534 are executed to count up the timer T1 and calculated the time Tv, as described before, and the current routine is terminated. In the subsequent execution of the routine, the branch to Step 536 is taken by the judgement at Step 552 because the Flag FS is already set by the previous routine. In Step 536, it is judged whether the timer T1 exceeded the time Tv and if the condition is not satisfied, this routine is terminated. Otherwise, i.e., if the rear vehicle height has been raised for the time Tv, the timer T1 is reset and the flag Fr is also reset (Step 538). Then, since FS is set in this case, 'YES' is taken at Step 540 to proceed to the returning operations of the altered rear vehicle height. The rear vehicle height is lowered (Step 560) to return to the original height to cope with a normal road surface and the flag FS is reset (Step 562).

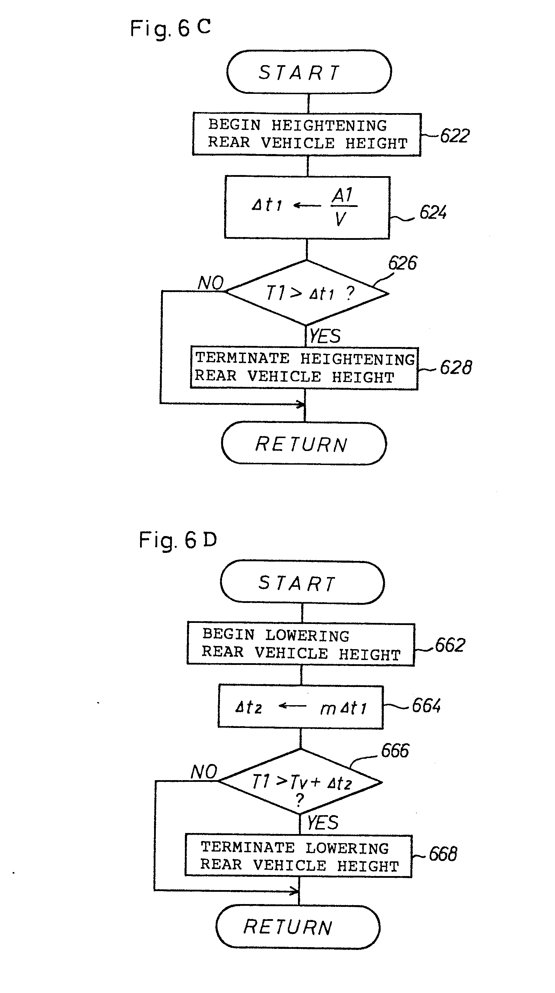

In the above processings, each of the opening time t1 of the relief solenoid valve 200e and the feeding time t2 from the compressor 200b is predetermined to be a single value. However, they may be determined to be various values in accordance with the size of the protrusion or the depression or they may be dependent on the vehicle speed V,

24

i.e., the lowering operations or the raising operations are continued until the rear wheels pass the protrusion or the depression. For example, in case of passing a depression, the processings shown by the flowchart of Fig. 6(C) are started by the setting of the timer T1 and the flag $\bar{Fr}$ at Step 532 of Fig. 6(B). After the raising operations began (Step 622), the time t1 is calculated as A1/V, which means the time for the rear wheels to come to the depression after the front wheels passed it, and when T1 exceeded t1, the raising operations are terminated.

For returning the raised rear vehicle height to the original height, the time t1 is not reset at Step 538 in Fig. 6(A) and instead of the process at Step 560, processings according to the flowchart in Fig. 6(D) are executed. After the lowering operations begin (Step 662), T2 is calculated as m t1 (Step 664), where

   m = (the time for lowering a definite vehicle height)/ (the time for raiseing the definite vehicle height)

When the timer T1 elapsed the time Tv + t2, the lowering operations are terminated.

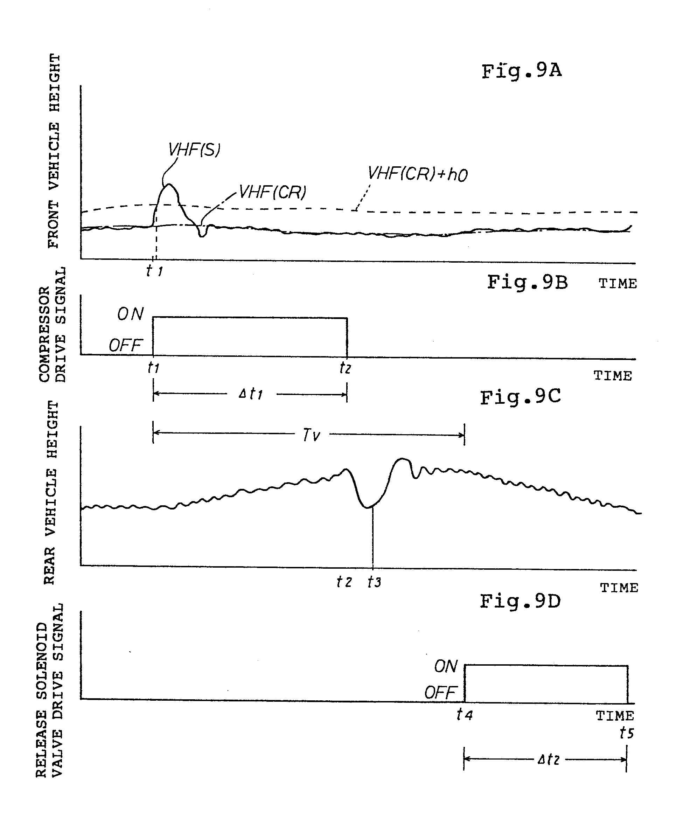

Fig. 9 shows a time chart indicating the processings for a case of passing a depression.

Before a time point t1 shown in Fig. 9, the automobile is running on a flat part of the road surface, the vehicle height VHF(S) obtained from the vehicle height sensors 1 and 2 draws waves of small amplitude, and the average vehicle height VHF(CR) obtained from the CR filter circuit 305a draws a

25

smoothed form of the waves. When the front wheel begins to move down into the depression of the road surface, the vehicle height VHF(S) sharply increases. At the time point t1, the vehicle height VHF(S) exceeds VHF(CR) + h1, in other words, it is judged in Step 552 in the flow chart shown in Fig. 6(A) that VHF(S)-VHF(CR) is greater than h1. At the time point t1, the ECU 300 starts sending out the drive signal for opening the leveling valves 151 and 152 and feeding compressed air to the air suspensions 3 and 4 from the compressor 200b until the time point t2 which is a time   t1 after the time point t1. By these operations, the rear vehicle height is gradually raiseed and when, at the time point t3, the rear wheels move down in the depression and the  rear vehicle height is kept unchanged. Then for the time   t2 between the time point t4, which is the time Tv later than the beginning of the operation of the compressor 200b, and t5 the release solenoid valve 200e is opened, returning the vehicle height to the normal state.

When the front wheels move up on a protrusions, the timings are same as that described above.

26

WHAT IS CLAIMED IS:

1. A rear height controller of a body for a vehicle provided with a variable suspension means for controlling the distance between the body and the front and rear wheel axles of the vehicle, the controller comprising:

a front vehicle height detection means for detecting a distance between the front wheel axle and the body of the vehicle and generating a front vehicle height signal;

a calculation means for determining a predetermined reference signal representative of vehicle height;

a protrusion judgment means for comparing said front vehicle height signal with the predetermined reference signal to generate a protrusion signal when the front vehicle height signal is less than the predetermined reference signal;

a sinking judgment means for comparing said front vehicle height signal with the predetermined reference signal to generate a sinking signal when the front vehicle height signal is greater than the predetermined reference signal; and

a rear height adjustment means for controlling the height of the body at the rear axle of the vehicle to assume an altered height within a first predetermined time after generation of the protrusion or sinking signals, the rear height adjustment means lowering the height of the body at the rear axle in response to the protrusion signal and raising the height of the body at the rear axle of the vehicle in response to the sinking signal.

2. A rear height controller as claimed in Claim 1, wherein 0192178 the rear height adjustment means returns the altered height to the original height within a second predetermined time after the protrusion signal or the sinking signal is generated.

3. A rear height controller as claimed in Claim 1, wherein a signal indicating a displacement of the height of the vehicle from the average height thereof is generated as the front vehicle height signal by the front vehicle height detection means.

4. A rear height controller as claimed in Claim 1, wherein a signal indicating a speed of the displacement of the height of the vehicle is generated as the front vehicle height signal by the front vehicle height detection means and that the protrusion judgment means or the sinking judgment means generates the protrusion signal or the sinking signal, respectively, depending on the sign and an absolute value of the front vehicle height signal.

5. A rear height controller as claimed in Claim 1, wherein the rear height controller includes a means for selectively determining whether the rear height adjustment means executes the height control regardless of the protrusion signal or the sinking signal.

6. A rear height controller as claimed in Claim 1, wherein the variable suspension means is a gas operated suspension, and the rear height adjustment means selectively controls gas

28

input and exhaust of gas chambers of the rear gas suspensions to lower or raise the height of the body at the rear axle of the vehicle.

7. A rear height controller as claimed in Claim 1, wherein the variable suspension means are liquid-operated suspensions, and the rear height adjustment means controls liquid feed to or liquid discharge from liquid cylinders of the rear liquid suspensions to lower or raise the height of the body at the rear axle of the vehicle.

8. A rear height controller as claimed in Claim 1, wherein the variable suspension means are mechanically operated suspensions, and the rear height adjustment means controls mechanical apparatus of the rear mechanical suspensions to lower or raise the height of the body at the rear axle of the vehicle.

9. A rear height controller as claimed in Claim 1, wherein the protrusion signal is generated upon contact between the front wheels and a protrusion projecting from a road surface, and the rear height adjustment means lowers the the height of the body within the first predetermined time before the rear wheels contact the protrusion.

10. A rear height controller as claimed in Claim 1, wherein the sinking signal is generated upon contact between the front wheels and a depression in a road surface, and the rear height adjustment means lowers the height of the body within the first predetermined time before the rear wheels contact the depression.

11. A rear height controller as claimed in Claim 1, further including a vehicle speed sensor, the first and second predetermined times being' calculated as a funcion of the vehicle speed.

12. A method for controlling the rear height of a vehicle provided with variable suspension means for controlling the distance between the body and the front and rear wheel axles of the vehicle, the method comprising the steps of:

detecting a front vehicle height as the distance between the front wheel axle and the body of the vehicle and generating a front vehicle height signal representative of said distance;

calculating a predetermined reference signal representative of a desired vehicle height;

generating a protrusion signal when the front vehicle height signal is less than the predetermined reference signal, and a sinking signal when the front vehicle height signal is greater than the reference signal; and

controlling the height of the body at the rear axle to assume an altered height within a first predetermined period. of time after generation of the protrusion or sinking signals, the vehicle height being lowered in response to the protrusion signal and being raised in response to the sinking signal.

30

13. The method of Claim 12 wherein the protrusion signal is generated after the front wheels contact a protrusion in a road surface, and the height of the body at the rear axle is lowered before the rear wheels contact the protrusion.

14. The method of Claim 12 wherein the sinking signal is generated after the front wheels contact a depression in a road surface, and the height of the body at the rear axle is raised before the rear wheels contact the depression.

Fig. 1

*M1* VEHICLE BODY

*M2*

```
┌─────────────────┐
│ FRONT WHEEL     │
│ VEHICLE HEIGHT  │
│ DETECTION MEANS │
└─────────────────┘
```

*WF*
FRONT WHEELS

*M6*

```
┌──────────────────┐
│ REAR WHEEL       │
│ SUSPENSION       │
│ CHARACTERISTICS  │
│ ALTERATION MEANS │
└──────────────────┘
```

*WR*
REAR
WHEELS

*M3*

```
┌─────────────────┐
│ PROTRUSION      │
│ JUDGMENT MEANS  │
└─────────────────┘
```

```
┌─────────────────┐
│ SINKING         │
│ JUDGMENT MEANS  │
└─────────────────┘
```

*M4*

Fig.2

Fig. 3A

0192178

Fig. 3B

0192178

Fig. 4

| | | |
|---|---|---|
| 1 — RIGHT FRONT WHEEL VEHICLE HEIGHT SENSOR | | |
| 2 — LEFT FRONT WHEEL VEHICLE HEIGHT SENSOR | INPUT SECTION 305 | BACKUP RAM 304 |
| 250 — VEHICLE SPEED SENSOR | | 307 |
| 3d — CONTROL ROD ACTUATOR | | RAM 303 |
| 4d — CONTROL ROD ACTUATOR | 306 | ROM 302 |
| 5d — CONTROL ROD ACTUATOR | | |
| 6d — CONTROL ROD ACTUATOR | OUTPUT SECTION | |
| 151a — LEVELING VALVE SOLENOID | | CPU 301 |
| 152a — LEVELING VALVE SOLENOID | | |
| 153a — LEVELING VALVE SOLENOID | | CK 308 CLOCK |
| 154a — LEVELING VALVE SOLENOID | | |
| 200a — COMPRESSED AIR FEED AND DISCHARGE MOTOR | | |
| 200e — RELEASE VALVE SOLENOIDS | | |

300

Fig. 5A

Fig. 5B

Fig. 6 A

Fig. 6 B

Ⓓ     Ⓔ

RAISE THE
REAR VEHICLE — 558
HEIGHT

T1 START, Fr ← 1 — 532

$Tv ← \dfrac{A1}{V} + A2$ — 534

Ⓐ     Ⓒ

NO ← T1 > Tv ? — 536

YES

T1 RESET
Fr ← 0 — 538

Ⓑ

540

NO ← FS = 1 ? — 540

YES

542

NO ← FP = 1 ? — 542

LOWER THE
REAR VEHICLE — 560
HEIGHT

YES ← 544

RAISE THE
REAR VEHICLE
HEIGHT

FS ← 0 — 562

FP ← 0 — 546

RETURN

Fig. 6 C

```
        ( START )
            │
┌───────────────────────┐
│ BEGIN HEIGHTENING     │──622
│ REAR VEHICLE HEIGHT   │
└───────────────────────┘
            │
    ┌───────────────┐
    │ Δt₁ ◄── A1/V  │──624
    └───────────────┘
            │
 NO       ╱─────────╲ 626
◄────────┤ T1 > Δt₁ ?│
         ╲─────────╱
            │ YES
┌───────────────────────┐
│ TERMINATE HEIGHTENING │──628
│ REAR VEHICLE HEIGHT   │
└───────────────────────┘
            │
        ( RETURN )
```

$$\Delta t_1 \leftarrow \frac{A1}{V}$$

$$T1 > \Delta t_1 \ ?$$

Fig. 6 D

```
        ( START )
            │
┌───────────────────────┐
│ BEGIN LOWERING        │──662
│ REAR VEHICLE HEIGHT   │
└───────────────────────┘
            │
    ┌───────────────┐
    │ Δt₂ ◄── m Δt₁ │──664
    └───────────────┘
            │
 NO       ╱──────────╲ 666
◄────────┤ T1 > Tv+ Δt₂│
         ╲─────?────╱
            │ YES
┌───────────────────────┐
│ TERMINATE LOWERING    │──668
│ REAR VEHICLE HEIGHT   │
└───────────────────────┘
            │
        ( RETURN )
```

$$\Delta t_2 \leftarrow m\,\Delta t_1$$

$$T1 > T_V + \Delta t_2\ ?$$

## Fig. 7

```
        VHF(S)n              710
        DETECTION

           tms               720
        HAS ELAPSED?    NO

           YES                730
```

$$VHFa,n \leftarrow \frac{(k-1)VHFa,n-1 + VHFb,n-1 + VHF(S)n}{k}$$

$$VHFb,n \leftarrow mod(k)\{(k-1)VHFa,n-1 + VHFb,n-1 + VHF(S)n\} \quad 740$$

## Fig. 8

```
         START

          Fr = 1        810
            ?        NO

          YES           820
       T1 INCREMENTAL
         COUNTING

         RETURN
```

**Fig.9A**

FRONT VEHICLE HEIGHT

VHF(S)

VHF(CR)

VHF(CR)+h0

t₁

TIME

**Fig.9B**

COMPRESSOR DRIVE SIGNAL

ON

OFF

t₁      t₂

Δt₁

TIME

**Fig.9C**

Tv

REAR VEHICLE HEIGHT

t₂  t₃

TIME

**Fig.9D**

RELEASE SOLENOID VALVE DRIVE SIGNAL

ON

OFF

t₄      TIME

t₅

Δt₂

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | EP-A-0 091 017 (NISSAN)<br>* abstract; figures 1, 2 * | 1,6,12 | B 60 G 17/00 |
| A | US-A-3 632 131 (ENGFER)<br>* abstract; figure 1 * | 1,6,12 | |
| A | PATENT ABSTRACTS OF JAPAN, vol. 7, no. 16 (M-187)[1161], 22nd January 1983; & JP - A - 57 172 808 (TOYOTA) 23-10-1982 (Cat. D,A) | 1,6,12 | |
| A | DE-A-3 403 649 (MITSUBISHI)<br>* page 25, lines 13-31; page 22, lines 19-28 * | 1,12 | |

TECHNICAL FIELDS
SEARCHED (Int. Cl.4)

B 60 G 17/00
B 60 G 23/00

The present search report has been drawn up for all claims

| Place of search | Date of completion of the search | Examiner |
|---|---|---|
| BERLIN | 07-05-1986 | KRIEGER P O |